# EUROPEAN PATENT APPLICATION

(11) **EP 0 662 280 A1**
(43) Date of publication of application: **12.07.1995**
(21) Application number: 94918537.5
(22) Date of filing: 20.06.1994
(51) Int. Cl.: A01G 31/00

(54) **PLANT CULTIVATING APPARATUS**

(30) Priority: 21.06.1993 JP 172070/93; 29.12.1993 JP 353682/93; 29.12.1993 JP 353684/93; 19.04.1994 JP 103241/94
(71) Applicant: Kirin Engineering Co. Ltd., Kanagawa 221 (JP)
(72) Inventor: KONO, Tadahisa, c/o Kirin Engineering Co., Ltd., Yokohama-shi, Kanagawa 221 (JP); HIWADA, Shoji, c/o Kirin Engineering Co., Ltd., Yokohama-shi, Kanagawa 221 (JP)
(74) Representative: Füchsle, Klaus, Dipl.-Ing.
(86) International application number: JP9400983
(87) International publication number: WO9500007

(57) **Abstract**

A plant cultivating apparatus which is provided with a casing in which planting surface-carrying plant cultivating panels are stored, and a machine storage formed unitarily with the casing on the inner or outer side thereof and having therein a machine for air-conditioning at least the interior of the casing, and a machine for supplying a cultivating liquid to the plant cultivating panels. The plant cultivating panels are arranged in a plurality of rows in the interior of the casing so that these panels can be drawn out. The interior of the casing can be shut off from the outer environment, i.e. outer atmosphere while plants are cultivated therein, and, during this time, human work is carried out from the outside only of the casing. Accordingly, the energy efficiency and cultivation efficiency of the apparatus is greatly improved. Since the plant cultivating panels can be taken out of and inserted into an apparatus body easily and handled efficiently, the planting harvesting and panel cleaning efficiencies are improved.

## Description

### Field of The Invention

The present invention relates to a plant cultivating apparatus for cultivating plants such as vegetables by using water under artificially prepared environment.

### Background Art

In a conventional technology, so-called a unit type plant cultivating apparatus is disclosed in the Japanese Patent Laid-open Publication No. HEI 4-91725, in which when it is required to obtain a medium amount of cultivated plants through an artificial water cultivation, various devices are disposed in association with a ready-made unit box to provide an integral structure thereby to make possible an effective cultivation. That is, this plant cultivating apparatus is provided with a unit box having an environmental shielding structure in which cultivation panels are disposed in ⊐-shape by stereoscopically arranging the panels for increasing cultivating area per equipment setting area, and is provided with a cultivation liquid device such as cultivation liquid tank, an electrical lighting device such as electrical lamp, an air-conditioner such as refrigerator, and a carbonic acid gas supply device such as carbonic acid gas cylinder, in the unit box, for the purpose of providing environmental conditions suitable for the cultivation.

However, the unit type plant cultivating apparatus disclosed in the above Japanese Patent Laid-open Publication No. HEI 4-91725 includes working areas in the unit (box), such as for planting, harvesting and maintaining workings, which do not contribute directly to an amount of plants to be cultivated. For this reason, the effective cultivated amount per equipment setting area is not obtained. Furthermore, it is necessary to control air-conditioning to these working areas, which requires unnecessary energy, being defective in an economical view point and hence providing a problem.

It is also difficult to easily disassemble the cultivation panels stereoscopically arranged in ⊐-shape, and when disassembling, this working has to be made on a relatively wide scale, thus also providing such problems as that a worker must carry out the planting working, harvesting working and panel cleaning working while moving around the cultivation panels etc., resulting in bad working efficiency, thus also providing a problem.

In general, when plants such as vegetables are cultivated by using water under the artificial environment, it is necessary for the plants to be irradiated with light and to get the cultivation liquid. In the conventional plant cultivation panels, the cultivation liquid is supplied to the plants which are left being planted and the plants are irradiated with the lighting device.

However, in the conventional plant cultivation panel, when a portion at which the supplied cultivation liquid is exposed or a portion at which the cultivation liquid is liable to adhere, and particularly, a portion to which the cultivation liquid is supplied or from which the cultivation liquid is discharged, is irradiated with light, algae will grow and the cleanness of the plant cultivation panels will be damaged by such algae, thus providing a problem. In order to prevent the growing of the algae, it may be considered to shield the cultivation liquid at exposed portions to prevent them from being irradiated with light. However, in some types of plant cultivation panels, the location of such shielding means may obstruct the conveyance of the panels into and out of the plant cultivating apparatus, which may result in the lowering of the working efficiency, thus also providing a problem.

In general, when an apparatus for cultivating plants such as vegetables under the artificial environment is fabricated at the some destination place, it is necessary to construct or design a housing, a cultivation liquid supply system, a cultivation tank and the like, at every time of the fabrication of the plant cultivation apparatus.

In such case, it is required to specifically construct or design the above equipments at every time of the fabrication thereof so as to meet with the respectively specific fabrication conditions, which requires much time, labour and cost, and furthermore, requires long period working at the construction site for assembling the equipments in accordance with the sizes and scales thereof. These matters adversely affect the cost of the plant cultivation apparatus itself.

Still furthermore, the conventional plant cultivation apparatus provides difficulty in the movement of the whole apparatus and difficulty in easily making the scale of the equipment large or small, in accordance with the plant cultivation scale.

The present invention was conceived in view of the above circumstances and has an object to provide a plant cultivation apparatus capable of achieving a high energy efficiency of the cultivation apparatus, taking wide cultivation area per equipment setting area to achieve a high cultivation efficiency, and achieving a high working efficiency such as for planting, harvesting and panel cleaning workings.

Another object of the present invention is to provide a plant cultivating apparatus including a plant cultivation panel structure having no portion at which a cultivation liquid is exposed and having an improved workability.

A further object of the present invention is to provide a plant cultivating apparatus capable of being fabricated with reduced cost by assembling a plurality of unit type structures having substantially the same design so as to easily make the scale of the apparatus large or compact and to reduce workings at the construction site.

### Disclosure of The Invention

The plant cultivating apparatus of the present invention is an apparatus which is provided with a housing for accommodating a plant cultivation panel having a plant planting surface and an equipment accommodating portion which is integrally disposed inside or outside of the housing and in which an equipment for performing an air conditioning at least in an interior of the housing and an equipment for supplying a cultivation liquid to the plant cultivation panel are accommodated, and is characterized in that a plurality of the plant cultivation panels are arranged inside the housing in a multiple rows and are provided with planting panels for planting plants so as to be easily taken out from the housing and in that the housing has the interior capable of being shut out environmentally from an external atmosphere when the plants are cultivated and artificial working of the cultivation is done only from the outside of the housing. According to this structure, the energy efficiency of the apparatus can be improved and the cultivating area per apparatus setting area can be made widened, thus improving the cultivating efficiency. Furthermore, since the plant planting panel can be easily taken in and out from the housing, the planting, harvesting and panel cleaning workings can be remarkably effectively performed.

Furthermore, the plant cultivating apparatus of the present invention is an apparatus in which the plant cultivation panel is provided with a planting panel arranged substantially horizontally for planting the plants, a cultivation liquid panel disposed below the planting panel for forming a cultivation liquid flow passage and a support panel fitted to a lower side of the cultivation liquid panel for supporting the cultivation liquid panel, the plant cultivation panel having one end to which a cultivation liquid supply unit is provided and another end to which a cultivation liquid discharge unit is provided, and the cultivation liquid supply unit is provided with a liquid supply opening formed between the planting panel and the cultivation liquid panel, a closing plate fitted to the liquid supply opening to close the same and a bell-and-spigot joint connected to an upper portion of the closing plate, and the cultivation liquid discharge unit is provided with a liquid discharge opening formed to the cultivation liquid panel and a liquid discharge nozzle formed to the support panel. The plant cultivating apparatus of the present invention further is an apparatus in which the plant cultivation panel is provided with a planting panel arranged substantially horizontally for planting the plants and a liquid flow passage formation support panel disposed below the planting panel for forming a cultivation liquid flow passage and for supporting the planting panel, the plant cultivation panel having one end to which a cultivation liquid supply unit is provided and another end to which a cultivation liquid discharge unit is provided, and the cultivation liquid supply unit is provided with a liquid supply opening formed between the planting panel and the liquid flow passage formation support panel, a closing plate fitted to the liquid supply opening to close the same and a bell-and-spigot joint connected to an upper portion of the closing plate, and the cultivation liquid discharge unit is provided with a liquid discharge nozzle formed to the liquid flow passage formation support panel. According to these structures, the plant cultivation panel having high cleanness with no algae caused by light irradiation can be realized, and in addition, according to this plant cultivation panel, the planting panel can be easily taken in and out from the housing by removing the bell-and-spigot joint of the cultivation liquid supply unit from the closing plate, thus being improved in the workability.

Still furthermore, the plant cultivating apparatus of the present invention is an apparatus in which the housing is provided with a plurality of housings, each having a cylindrical shape rectangular in section and having at least one open surface, and each housings accommodates the plant cultivation panel, a lighting device for irradiating the plants on the plant cultivation panel and a cultivation liquid supply pipe for supplying the cultivation liquid to the plant cultivation panel, and a cultivation liquid supply pump is provided to one of the housings and the housings are integrally connected one by one through the openings of the respective housings. According to such structure, there is eliminated a troublesome working for designing the plant cultivating apparatus every time it is required to be assembled, and furthermore, in the actual working site, as only the connecting working of the respective housings which have been preliminarily manufactured is required, remarkably reducing the working processes and hence reducing the manufacturing cost are realized. In addition, in a case where it is necessary to move the whole apparatus or to increase or decrease the scale of the equipment of the total apparatus in accordance with the plants to be cultivated after the operation start for the cultivation, the apparatus can be easily moved only by disconnecting the housings and the numbers of the housings can be also easily increased or decreased by adding or removing the housings.

### Brief Description of The Drawings

Fig. 1 is a perspective view of a plant cultivating apparatus according to one embodiment of the present invention.

Fig. 2 is a perspective view of a plant cultivating apparatus according to another embodiment of the present invention.

Fig. 3 is a perspective view showing a planting panel and a cultivation liquid panel utilized for the present apparatus before assembling the same.

Fig. 4 is a front view showing a planting panel and a cultivation liquid panel utilized for the present apparatus after assembling the same.

Fig. 5 is a sectional view taken along the line V-V in Fig. 4.

Figs. 6(a) and 6(b) are sectional views showing modifications of a hole 16 formed to the planting panel 10 and Fig. 6(c) is a perspective view of a further modification of the hole 16.

Fig. 7 is a perspective view showing a planting panel and a cultivation liquid panel of another embodiment utilized for the present apparatus before assembling the same.

Fig. 8 is a front view showing a planting panel and a cultivation liquid panel of another embodiment utilized for the present apparatus after assembling the same.

Fig. 9 is a plane view of Fig. 8.

Fig. 10 is a sectional view taken along the line X-X in Fig. 8.

Fig. 11 is a perspective view showing a planting panel and a cultivation liquid panel of a further embodiment utilized for the present apparatus before assembling the same.

Fig. 12 is a perspective view of one embodiment of a plant cultivation panel utilized for the apparatus of the present invention.

Fig. 13 is an enlarged sectional view of a portion of the plant cultivation panel taken along the line XIII-XIII in Fig. 12.

Fig. 14 is an enlarged sectional view of a portion of a plant cultivation panel of another embodiment.

Fig. 15 is a perspective view of another embodiment of a plant cultivation panel utilized for the apparatus of the present invention.

Fig. 16 is an enlarged sectional view of the plant cultivation panel taken along the line XVI-XVI in Fig. 15.

Fig. 17 is a plane view showing one example of a flow passage formation support panel constituting the plant cultivation panel.

Fig. 18 is a plane view showing another example of a flow passage formation support panel constituting the plant cultivation panel.

Fig. 19 is a plane view showing a further example of a flow passage formation support panel constituting the plant cultivation panel.

Fig. 20 is a plane view showing a still further example of a flow passage formation support panel constituting the plant cultivation panel.

Fig. 21 is a enlarged sectional view of a portion of a further embodiment of a plant cultivation panel to be utilized for the apparatus of the present invention.

Fig. 22 is a enlarged sectional view of a portion of a still further embodiment of a plant cultivation panel to be utilized for the apparatus of the present invention.

Fig. 23 is a enlarged sectional view of a portion of a still further embodiment of a plant cultivation panel to be utilized for the apparatus of the present invention.

Fig. 24 is substantially a front view of one embodiment of a plant cultivating apparatus utilizing the plant cultivation panel.

Fig. 25 is a plane view of Fig. 24.

### Best Modes for Embodying The Invention

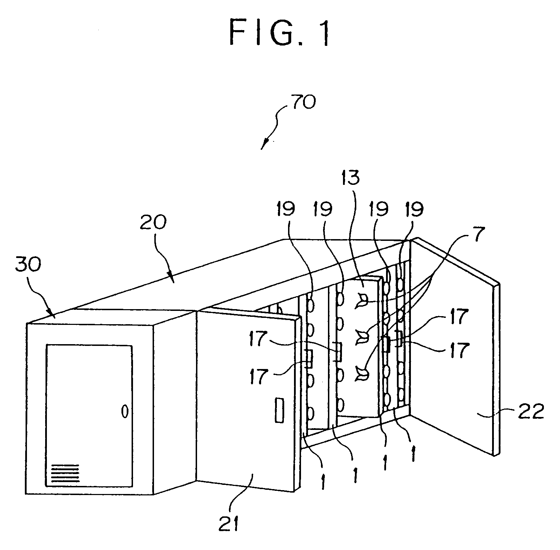

Hereunder, an embodiment of a plant cultivating apparatus according to the present invention will be described with reference to Fig. 1.

A plant cultivating apparatus 70 of the present invention comprises, as shown in Fig. 1, a housing 20 for accommodating plant cultivation panels 1 each provided with a plant planting surface and a equipment accommodation portion or unit 30 integrally disposed adjacent the housing 20.

The housing 20 has an inner space in which a plurality of plant cultivation panels 1 each having the plant planting surface is densely accommodated in a vertically standing arrangement with a constant distance from each other. The distance between the adjoining two plant cultivation panels 1 is determined to be a minimal distance being required for the purpose of high cultivation density and improved cultivation efficiency. The plant cultivation panels 1 are accommodated in the housing 20 fully deeply toward the back.

The housing 20 has an opened front end to which an openable door elements 21 and 22 are provided and the plant cultivation panel inlet (outlet) opening is formed by opening the door elements 21 and 22. Further, the interior of the housing 20 is environmentally shielded by closing the door elements 21 and 22 from an external atmosphere.

Each of these plant cultivation panels 1 accommodated in the housing 20 has at least one surface formed as the plant planting surface 13, on which plants 7 are planted. On the other hand, a plurality of fluorescent lamps 19 are detachably mounted to another surface of the plant cultivation panel 1. The fluorescent lamps 19 are adapted to irradiate the plants 7 planted to one plant cultivation panel facing the other adjacent plant cultivation panel on which the fluorescent lamps 19 are mounted. The fluorescent lamps 19 may be disposed in a suspended manner in spite of the mounting on the plant cultivation panel 1.

Each of the plant cultivation panel 1 of the structure described above is provided with, as described hereinafter, for example, a planting panel on which plants 7 are planted, a cultivation liquid panel fitted to the planting panel thereby to form a cultivation liquid passage, and a support panel fitted to the lower portion of the cultivation liquid panel to support it. The planting panel is disposed to be taken out outside of the housing 20, and it is of course possible to re-insert the taken-out planting panel in the housing 20. When the planting panel is taken out of the housing 20, only the planting panel may be taken out by removing it from the cultivation liquid panel, the planting panel and the cultivation liquid panel may be together taken out by removing them from the support panel, or the planting panel, the cultivation liquid panel and the support panel may be taken out together as the plant cultivation panel 1. In the example of Fig. 1, the plant cultivation panel 1 being disposed to be slidably movable from the front side to the inner deeper side of the housing 20 or, vice versa, is drawn out of the housing 20 by pulling out a handle 17 secured to the support panel.

The planting working, harvesting working, maintaining working and the like, are performed , for example, after the plant cultivation panel is pulled out. That is, the plant cultivation panels 1 are arranged in the housing 20 in the high density, as mentioned hereinbefore, to the extent that a worker does not enter thereinto, and these artificial workings are performed only from the outside of the housing 20.

The flow passages through which the cultivation liquid passes, are formed inside the plant cultivation panels 1 of the structure described above so that the cultivation liquid flows from the upper side to the lower side of the plant cultivation panels 1. That is, although not shown in Fig. 1, a cultivation liquid supply device is provided at the upper portion of the plant cultivation panels 1 and a cultivation liquid recovery device is also provided at the lower portion thereof. Preferred examples of the plant cultivation panel 1 will be described in detail hereinafter.

Within the equipment accommodation portion 30, of a box-like shape in Fig. 1, integrally located with the housing 20 in which the plant cultivation panels 1 are accommodated, there are accommodated at least an air conditioning device for controlling air conditioning in the housing 20, a liquid tank for supplying the cultivation liquid to the plant cultivation panels 1 or a pump. Further, various equipments such as a lighting device, a carbonic acid cylinder and various controllers may be additionally accommodated in the equipment accommodation portion 30. Various ducts, lines, or wirings may extend from these equipments toward the inside of the housing 20 as occasion demands.

As described above, according to the plant cultivating apparatus 70 of the present invention, since the housing 20 and the equipment accommodation portion 30 are integrally formed, and a working area is set to the outside of the apparatus 70, an improved energy efficiency of the apparatus can be realized and the cultivation area per unit equipment location area can be made wide, thereby realizing an improved cultivation efficiency. Furthermore, since the plant cultivation panels can be easily put in or taken out of the plant cultivating apparatus, various working such as planting working, harvesting working and panel cleaning working can be done with improved working efficiency.

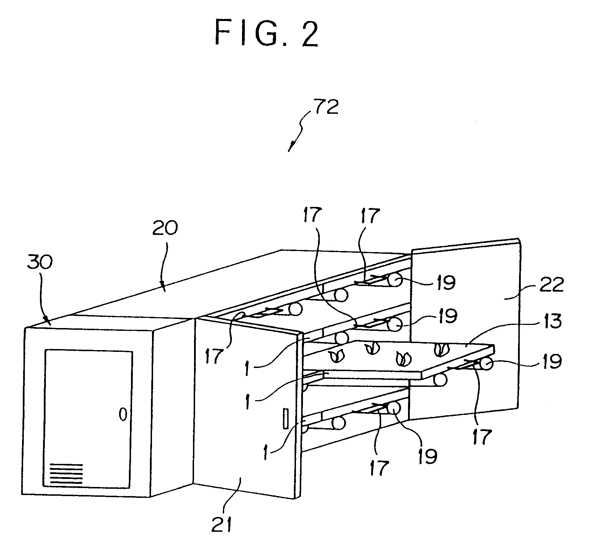

Next, another preferred embodiment of the plant cultivating apparatus according to the present invention will be described hereunder with reference to Fig. 2.

The embodiment of a plant cultivating apparatus 72 of Fig. 2 is different from the aforementioned embodiment (Fig. 1) in the arrangement of the plant cultivation panels 1 accommodated in the housing 20, and the other structures thereof are substantially the same as the former embodiment.

That is, the arrangement of a plurality of the plant cultivation panels 1 in the embodiment of Fig. 2 is different in that the plant cultivation panels 1 of this embodiment are arranged in horizontal stages in a vertical direction with a constant distance from each other. In such arrangement, the plant cultivation panels are arranged substantially horizontally in plural stages, but in order to achieve so-called flow-down supply of the cultivation liquid as in the former embodiment, the plant cultivation panels 1 may be arranged and accommodated to provide somewhat inclined configuration. In case of substantially horizontal cultivation as shown in Fig. 2, even if plant having a long stem is cultivated, the long stem stands straight without hanging down. Therefore, plant having high quality can be cultivated regardless of the kinds of plants. Further, the cultivation liquid is less oozing from the plant planting surface of the plant cultivation panel. In the embodiment of Fig. 2, the distance between the adjacent plant cultivation panels 1 is determined to be minimal for the requirement of the cultivation, and the panels 1 are also set deeply toward the back in the housing 20. Since the plant cultivation panels 1 are densely accommodated in the multi-stage arrangement in the housing 20 with no space in which a worker enters, and the planting operation, harvesting operation, maintaining operation and the like, are performed only from the outside of the housing 20.

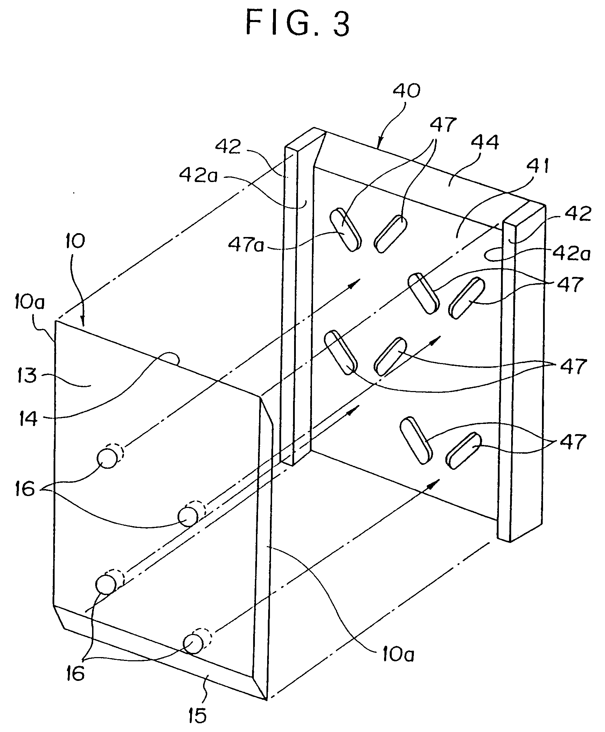

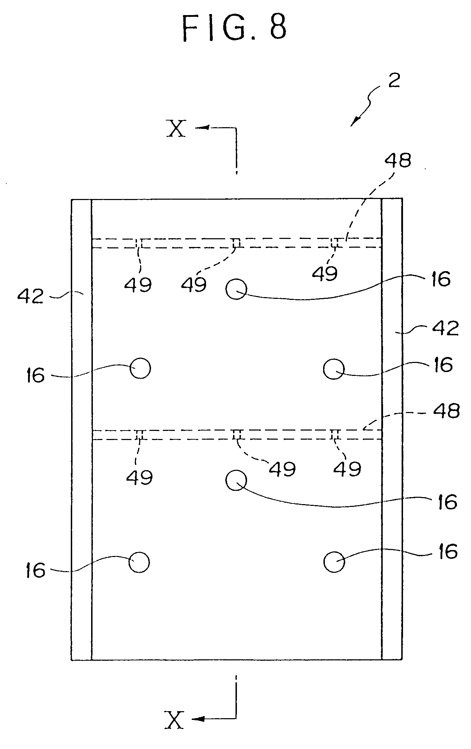

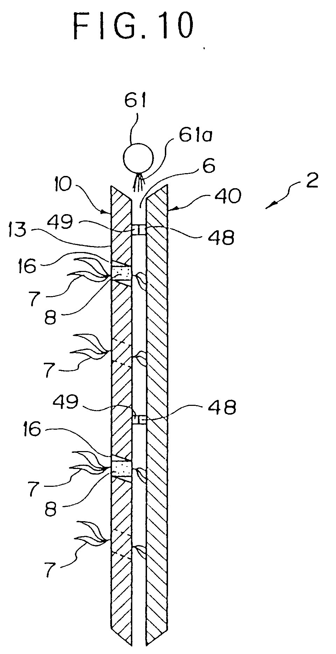

Hereunder, preferred examples of combination of the planting panel and the cultivation liquid panel constituting the main portion of the plant cultivation panel will be described with reference to Figs. 3 through 11.

A first example of combination will be described with reference to Figs. 3 to 6. The planting panel 10 and the cultivation liquid panel 40 are usually formed to provide rectangular shapes which are capable of being assembled together, and these panels are generally formed of plastic material such as styrene foam.

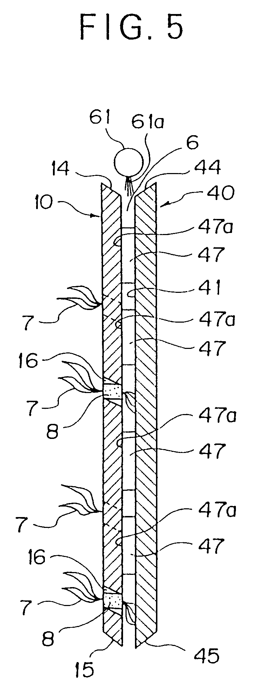

A plurality of through holes 16 for planting are formed to the planting panel 10, and plants 7 each fixed by an urethane material 8 for plant fixing are disposed in the through holes 16, respectively, as shown in Fig. 5.

On the other hand, the cultivation liquid panel 40 assembled with the planting panel 10 has an inner surface side 41 on which a plurality of paired liquid guide members 47 are formed in a projecting manner as spacer members. The paired guide members 47 achieve so-called spacer function for limiting the space between the adjacent planting panel 10 and the cultivation liquid panel 40 and forming a cultivation liquid passage therebetween. Further, the paired guide members 47 achieve so-called liquid supply function for flowing the cultivation liquid entirely toward the through holes 16 of the planting panel, to ensure the exact supply of the cultivation liquid to the plants 7 in the holes 16.

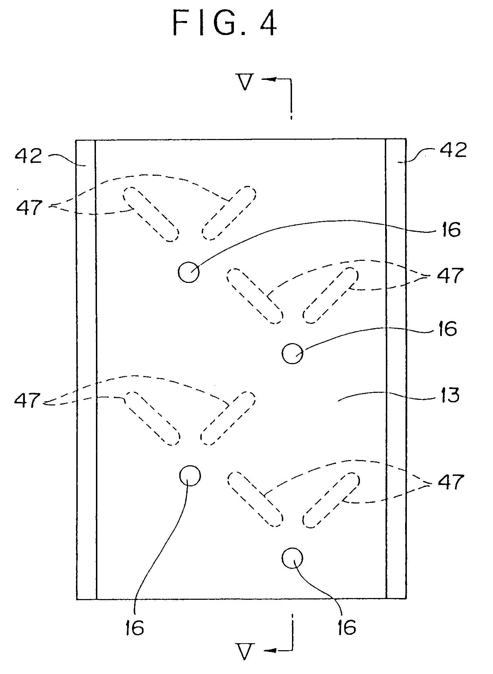

Accordingly, such paired guide members 47 have a close relationship with the hole 16 formed to the planting panel 10, and as shown in Fig. 4, the paired guide members 47 are formed so as to be arranged above the corresponding through hole 16. In this case, although not shown, a projection in shape of a column may be disposed slightly below the through hole 16 to branch the cultivation liquid collected by the guide members 47 in two directions at a portion near the root of the plant.

Further, fitting guide members 42, 42 are disposed to both width-side end portions of the cultivation liquid panel 40 in a projecting manner so that inside surfaces 42a, 42a of these guide members 42, 42 are detachably engaged with side surfaces 10a, 10a of the planting panel 10, respectively. In the present embodiment, the combination of the planting panel 10 and the cultivation panel 40 is performed in the fit-assembling manner as one example, but it is to be noted that the present embodiment is not limited only to such "fit-combination".

When the planting panel 10 and the cultivation liquid panel 40 of the described embodiment are fitted together, the planting panel 10 is gradually pushed into the cultivation liquid panel 40 side. At this time, as shown in Fig. 5, the advancing of the planting panel 10 stops, when the inside surface of the planting panel 10 abuts against the projected surfaces 47a of the paired guide members 47 formed as spacer members on the surface of the cultivation liquid panel 40, thus forming the cultivation liquid passage 6 between the inner surfaces of these panels 10 and 40 at portions other than the location of the guide members 47.

Disposed to the upper portion, as viewed, of the thus formed cultivation liquid passage 6 is a cultivation liquid supply tube 61 as shown in Fig. 5, and the cultivation liquid is supplied from the supply tube 61 in the downward direction through a cultivation liquid jetting port 61a formed to the supply tube 61. The numbers and the arrangement of the liquid jetting ports 61a are determined in consideration of the arrangement of the paired guide members 47 and the like so that the cultivation liquid can be equally supplied to all the plants 7.

Furthermore, as shown in Fig. 5, the planting panel 10 and the cultivation liquid panel 40 have upper end portions 14 and 44 being cut inwardly obliquely in the assembled state for ensuring the guiding of the cultivation liquid to the cultivation liquid passage 6. On the other hand, the lower end portions 15 and 45 of the planting panel 10 and the cultivation liquid panel 40 are cut outwardly obliquely to prevent the liquid from falling in drops.

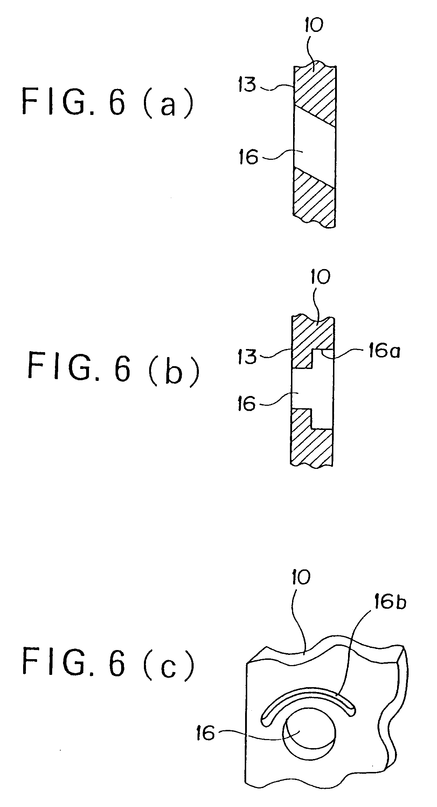

Further, in order to prevent the cultivation liquid from bleeding toward the plant planting surface 13 of the planting panel 10, various countermeasure to the structure of the through hole 16 are considered as described hereunder. That is, the through hole 16 may be formed to incline upward with respect to the plant planting surface 13 as shown in Fig. 6(a), a stepped portion 16a may be formed inside surface of the through hole 16 as shown in Fig. 6(b), or a curved groove 16b or projection may be formed on the inside surface of the planting panel 10 above the through hole 16 to turn the cultivation liquid flow aside.

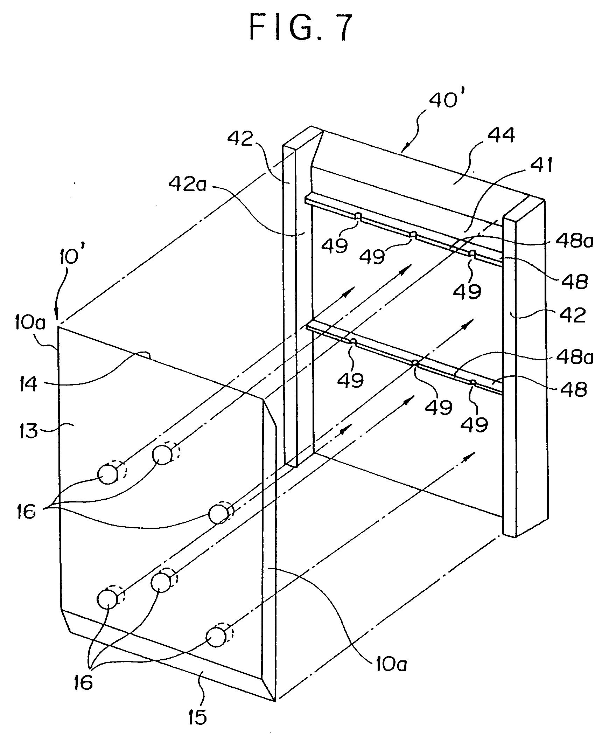

The other preferred combination of the planting panel 10 and the cultivation liquid panel 40 will be described hereunder with reference to Figs. 7 through 10.

Referring to Figs. 7 through 10, a cultivation liquid panel 40' assembled with a planting panel 10' has an inner surface 41 on which baffle plates 48 are integrally provided in a projecting manner in the widthwise direction thereof as spacer plates. A plurality of cutouts 49 are formed to the front end portion of each of the baffle plates 48 for guiding the cultivation liquid from the upper portion towards the planting holes 16.

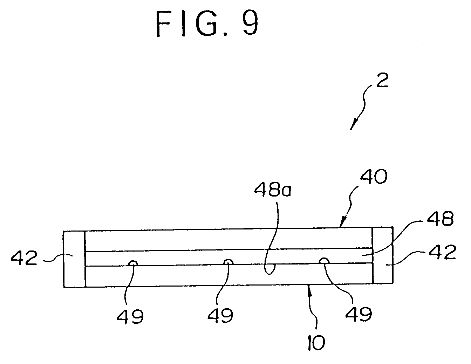

When the cultivation liquid panel 40' and the planting panel 10' are fitted together, the inner surface of the planting panel 10' abuts, as shown in Fig. 9, against the baffle plates 48 as the spacer plates formed on the inner surface of the cultivation liquid panel 40', thus forming the cultivation liquid passage between the assembled cultivation liquid panel 40' and the planting panel 10' at portions other than the location of the spacer plates 48.

Further, as shown in Figs. 3 through 10, the paired guide members 47 and the baffle plates 48 are formed as the spacer members on the surfaces of the cultivation liquid panels 40 and 40', but they may be of course formed on the planting panel 10 and 10'.

Furthermore, the combination of the paired guide members 47 and the baffle plates 48 may be used, as occasion demands. For example, in such combination, the baffle plate 48 may be disposed at the most upper portion near the bring-up liquid supply tube 61 and the paired guide members 47 may be disposed below the baffle plate 48. The location of the baffle plate 61 to the uppermost portion ensures the uniform flow of the cultivation liquid supplied from the supply tube 61, even if the flow therefrom be ununiform.

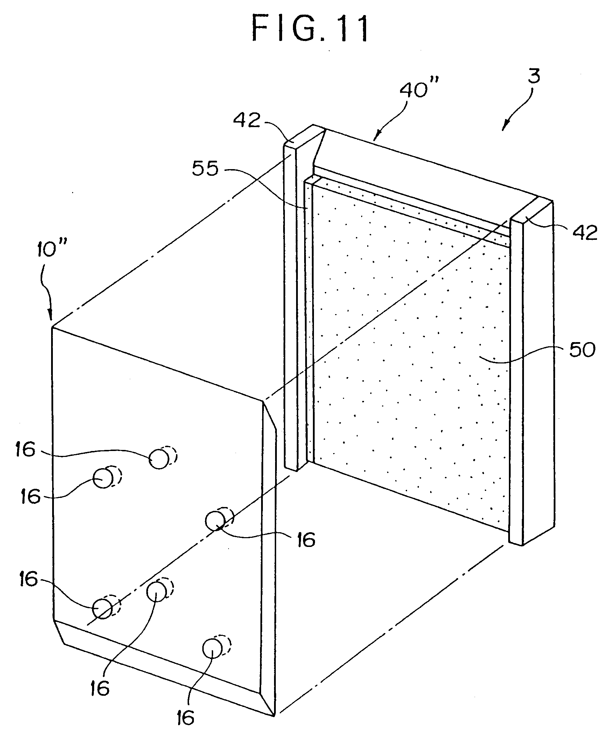

A further example of the preferred combination of the planting panel and the cultivation liquid panel will be described hereunder with reference to Fig. 11.

In the example of Fig. 11, there is no any spacer members such as paired guide members 47 and the baffle plates 48, and in substitution for them, a porous polymer material 50 having a water absorption property is disposed between a planting panel 10'' and a cultivation liquid panel 40'' as means for uniformly supplying the cultivation liquid.

A resin mold product such as urethane foam may be used as the porous polymer material 50, and the cultivation liquid flows down in the porous polymer material 50 to supply the cultivation liquid to the plants. The means for uniformly supplying the cultivation liquid is not limited to such porous polymer material 50, and other various means for having water absorption, water retaining and flow control properties may be utilized instead.

As described hereinabove, the utilization of easily combinable and detachable two panels ensures an easy and accurate cleaning of the inner surfaces of the panels which is required after the plant cultivation process, and also ensures a sufficient sanitary effect. In addition, it is easily performed to handle the panels at the plant harvesting time.

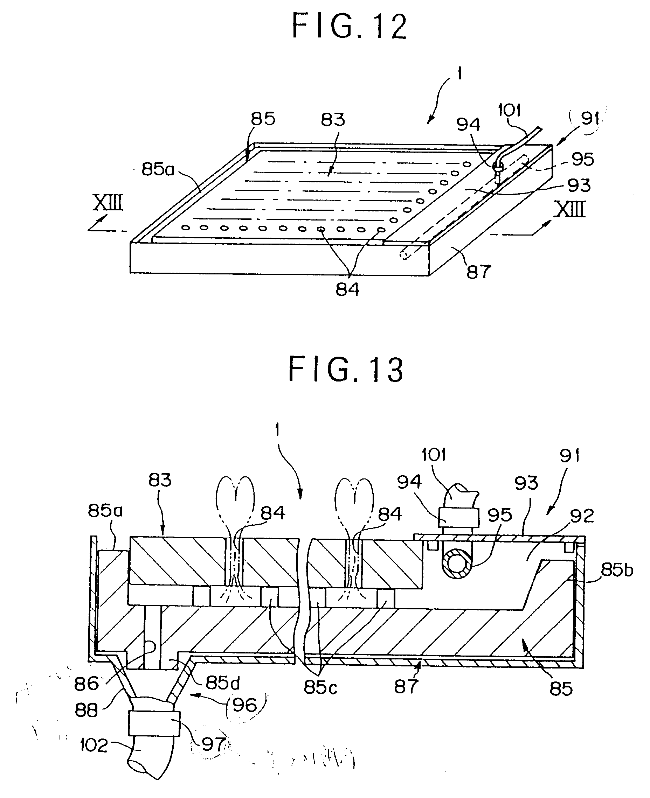

Next, a preferred embodiment of the plant cultivation panels which are disposed in the housing in substantially horizontal multi-stage arrangement and are superior in light-shielding property with respect to the cultivation liquid and panel take-out handling property will be described hereunder with reference to Figs. 12 through 23.

Fig. 12 is a perspective view showing one embodiment of the plant cultivation panel to be utilized for the plant cultivating apparatus of the present invention, and Fig. 13 is a partially enlarged sectional view taken along the line XIII-XIII of the plant cultivation panel of Fig. 12. Referring to Figs. 12 and 13, the plant cultivation panel 1 is provided with a planting panel 83 for planting plants, a cultivation liquid panel 85 fitted into the planting panel 83 from the lower side thereof and adapted to form a cultivation liquid flow passage, and a support panel 87 fitted to the cultivation liquid panel 85 from the lower side thereof and adapted to support the same. A cultivation liquid supply unit 91 is disposed on one end portion of the plant cultivation panel 1 and a cultivation liquid discharge unit 96 is disposed on the other end portion thereof.

The planting panel 83 is formed of a rectangular plate member provided with a plurality of penetrated holes 84 for planting the plants.

The cultivation liquid panel 85 is formed of a rectangular plate member having three end portions to which dam portions 85a are formed and having one end portion to which another dam portion 85b is formed. A plurality of protruded portions 85c are formed on an upper surface of the cultivation liquid panel 85, and the planting panel 83 is mounted detachably into the cultivation liquid panel 85 in a manner such that the planting panel 83 abuts against three end dam portions 85a and is disposed on the protruded portions 85c. Under this state, a liquid supply space(or opening) 92 is defined between the planting panel 83 and the dam portion 85b of the cultivation liquid panel 85. Furthermore, a liquid discharge opening 86 for discharging the cultivation liquid is formed at a portion near one end portion (left-hand side in the illustration) of the cultivation liquid panel 85.

The support panel 87 has an opened box shape having rectangular inner surfaces and is provided with a liquid discharge nozzle 88 directed downward for discharging the cultivation liquid at a portion near one end portion thereof. The support panel 87 is set so that the liquid discharge nozzle 88 accords with the liquid discharge opening 86.

Under the condition that the planting panel 83, the cultivation liquid panel 85 and the support panel 87 are integrally assembled as mentioned above, a closing plate 93 is mounted to the liquid supply open space(or opening) 92 formed between the planting panel 83 and the dam portion 85b of the cultivation liquid panel 85 so as to close the open space(or opening) 92. The closing plate 93 has an upper portion to which a bell-and-spigot joint 94 is connected, and a lower portion to which a cultivation liquid distribution tube 95 communicated with the bell-and-spigot joint 94 is connected. The cultivation liquid distribution tube 95 is disposed in the liquid supply open space(or opening) 92 in parallel to the cultivation liquid panel 85, thereby to uniformly flow out the cultivation liquid to the cultivation liquid panel 85 through the perforated holes formed thereto at necessary portions. The cultivation liquid supply unit 91 is constructed by the liquid supply open space(or opening) 92, the closing plate 93 and the bell-and-spigot joint 94.

On the other hand, the cultivation liquid discharge unit 96 is constructed by the liquid discharge opening 86, the liquid discharge nozzle 88 of the support panel 87 and the bell-and-spigot joint 97 connected to the liquid discharge nozzle 88.

In the plant cultivation panel 1 of the structure described above, the cultivation liquid can be supplied, by connecting a cultivation liquid supply tube 101 to the bell-and-spigot joint 94, onto the cultivation liquid panel 85 through the bell-and-spigot joint 94 and the cultivation liquid distribution tube 95 of the cultivation liquid supply unit 91. At this time, since the lower portion of the bell-and-spigot joint 94 is connected to the closing plate 93 for closing the liquid supply open space (or opening) 92 of the cultivation liquid supply unit 91, the cultivation liquid is never exposed to light in the cultivation liquid supply unit 91.

The cultivation liquid supplied on the cultivation liquid panel 85 flows down on the cultivation liquid panel 85 towards the liquid discharge opening 86. During that time, the cultivation liquid is properly absorbed by the plants extending downward through the holes 84 of the planting panel 83. Further, during this flow-down of the cultivation liquid, light is shut out by the planting panel 83 disposed above the liquid flow passage. Therefore, the cultivation liquid is not exposed to light.

The cultivation liquid reaching the liquid discharge opening 86 constituting the cultivation liquid discharge unit 96 flows down therein and then is fed to a cultivation liquid recovery tube 102 connected to the bell-and-spigot joint 97 through the liquid discharge nozzle 88. In this cultivation liquid discharge unit 96, an upper portion of the bell-and-spigot joint 97 is connected to the liquid discharge nozzle 88 of the support panel 87, so that the cultivation liquid is not exposed to light at any portion. Further, in the illustrated embodiment, a portion near the lower end of the discharge liquid opening 86 of the cultivation liquid panel 85 projects downward, thereby to form a protruded portion 85d. Since this protruded portion 85d projects into the interior of the liquid discharge nozzle 88 the cultivation liquid flowing down through the liquid discharge opening 86 can be minimally prevented from splashing due to the collision with the liquid discharge nozzle 88, and the splashed liquid can be also prevented from entering into the space between the cultivation liquid panel 85 and the support panel 87.

According to the plant cultivation panel 1 of the structure described above, the planting panel 83 can be easily fitted in the panel 85 or taken out from the panel 85, by disconnecting the bell-and-spigot joint 94 from the closing plate 93 and removing the closing plate 93 (or rotating the same with the joint potion being the base of the rotation). Accordingly, even in a case where only the planting panel 83 is removed from the plant cultivation panel 1 to perform the other working, the extremely high workability can be realized. Furthermore, in a case where the bell-and-spigot joint 97 is removed from the liquid discharge nozzle 88, a movement of the plant cultivation panel 1 itself can be realized. Hence, the extremely high workability can be realized.

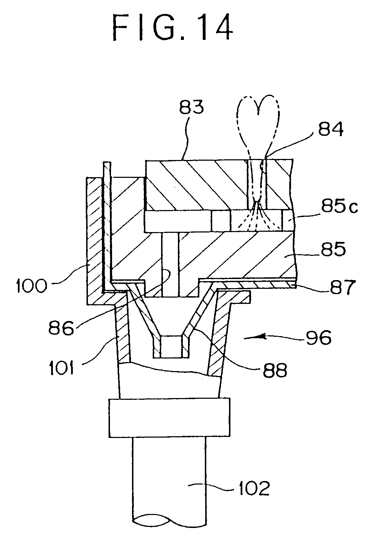

In the described embodiment, although the bell-and-spigot joint 97 is connected to the liquid discharge nozzle 88 of the support panel 87, an example in which the bell-and-spigot joint 97 is not connected to the liquid discharge nozzle 88 may be adapted. Fig. 14 is a partial sectional view showing the cultivation liquid discharge unit of the planting panel of such example. Referring to Fig. 14, the shown example has substantially the same structure as the plant cultivation panel 1 shown in Figs. 12 and 13 except that the bell-and-spigot joint 97 is not connected to the liquid discharge nozzle 88 of the support panel 87. The plant cultivation panel 1 shown in Fig. 14, is of the condition that it is supported by a support member 100 of the plant cultivating apparatus and that the liquid discharge nozzle 88 is positioned inside a nozzle 101 formed at a lower portion of the support member 100 so as to project downward. The cultivation liquid recovery tube 102 is connected to the nozzle 101 of the support member 100. In such case, the cultivation liquid reaching the liquid discharge opening 86, flows down through the liquid discharge opening 86 and is then fed to the cultivation liquid recovery tube 102 through the liquid discharge nozzle 88 and the nozzle 101 of the support member 100. Therefore, the cultivation liquid is not exposed to light at any portion of the discharge unit 96. In addition, since the plant cultivation panel 1 is not connected to the cultivation liquid recovery tube 102, the plant cultivation panel 1 can be easily moved.

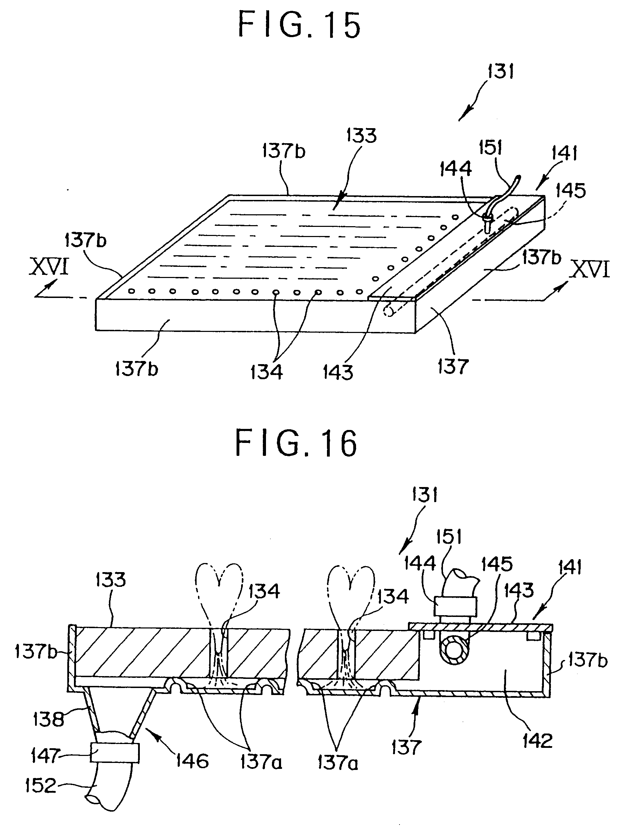

Fig. 15 is a perspective view representing a further embodiment of the plant cultivation panel preferably utilized for plant cultivation according to the present invention. Fig. 16 is a partially enlarged sectional view of the plant cultivation panel of Fig. 15 taken along the line XVI-XVI thereof. Referring to Figs. 15 and 16 a plant cultivation panel 131 is provided with a planting panel 133 for planting plants and a flow passage formation support panel 137 fitted into the lower side of the planting panel 133, forming the cultivation liquid flow passage and supporting the planting panel 133. The plant cultivation panel 131 has one end portion at which a cultivation liquid supply unit 141 is provided, and also has the other end portion at which a cultivation liquid discharge unit 146 is provided.

The planting panel 133 has a rectangular plate-like structure and is formed with a plurality of penetrated holes 134 to which plants are planted.

The flow passage formation support panel 137 is of an opened box-like structure having rectangular inner surfaces as shown in Figs. 15 to 17, and a liquid discharge nozzle 138 for discharging the cultivation liquid is formed at a portion near one end of the support panel 137 so as to extend downward. A plurality of protruded portions 137a are formed on the inner surface of the flow passage formation support panel 137. The planting panel 133 is detachably mounted on the flow passage formation support panel 137 in a position in which the planting panel 133 is disposed on the protruded portions 137a in condition of abutting against three wall portions 137b of the support panel 137.

Under the condition that the planting panel 133 and the flow passage format ion support panel 137 are mutually fitted into, and resulting in forming an integral structure, a liquid supply open space(or opening) 142 is formed between the planting panel 133 and one wall portion 137b of the flow passage formation support panel 137. A closing plate 143 is fitted to this liquid supply open space(or opening) 142 so as to close the same. This closing plate 143 has an upper portion to which is connected a bell-and-spigot joint 144 and a lower portion to which is connected a cultivation liquid distributing tube 145 communicated with the bell-and-spigot joint 144. This cultivation liquid distribution tube 145, having many holes perforated at predetermined portions, is disposed inside the liquid supply open space (or opening) 142 in parallel to the planting panel 133 so that the cultivation liquid flows uniformly to the flow passage formation support panel 137. The cultivation liquid supply unit 141 is constructed by the liquid supply open space (or opening) 142, the closing plate 143 and the bell-and-spigot joint 144.

On the other hand, the cultivation liquid discharge unit 146 is constructed by the liquid discharge nozzle 138 of the support panel 137 and the bell-and-spigot joint 147 connected to the liquid discharge nozzle 138.

In the plant cultivation panel 131 of the structure described above, the cultivation liquid can be supplied, by connecting a cultivation liquid supply tube 151 to the bell-and-spigot joint 144, onto the flow passage formation support panel 137 through the bell-and-spigot joint 144 and the cultivation liquid distribution tube 145 of the cultivation liquid supply unit 141. At this time, since the lower portion of the bell-and-spigot joint 144 is connected to the closing plate 143 for closing the liquid supply open space(or opening) 142 of the cultivation liquid supply unit 141, the cultivation liquid is never exposed to light in the cultivation liquid supply unit 141.

The cultivation liquid supplied on the flow passage formation support panel 137, flows down on the flow passage formation supply panel 137 towards the liquid discharge opening 138. During that time, the cultivation liquid is properly absorbed by the plants extending downward through the holes 134 of the planting panel 133 disposed above the protruded portions 137a. Further, during this flow-down of the cultivation liquid, light is shut out by the planting panel 133 disposed above the liquid flow passage. Therefore, the cultivation liquid is not exposed to light.

The cultivation liquid reaching the liquid discharge opening 138 constituting the cultivation liquid discharge unit 146 flows down therein and then is fed to a cultivation liquid recovery tube 152 connected to the bell-and-spigot joint 147 through the liquid discharge nozzle 138. In this cultivation liquid discharge unit 146, an upper portion of the bell-and-spigot joint 147 is connected to the liquid discharge nozzle 138 of the flow passage formation support panel 137, so that the cultivation liquid is not exposed to light at any portion.

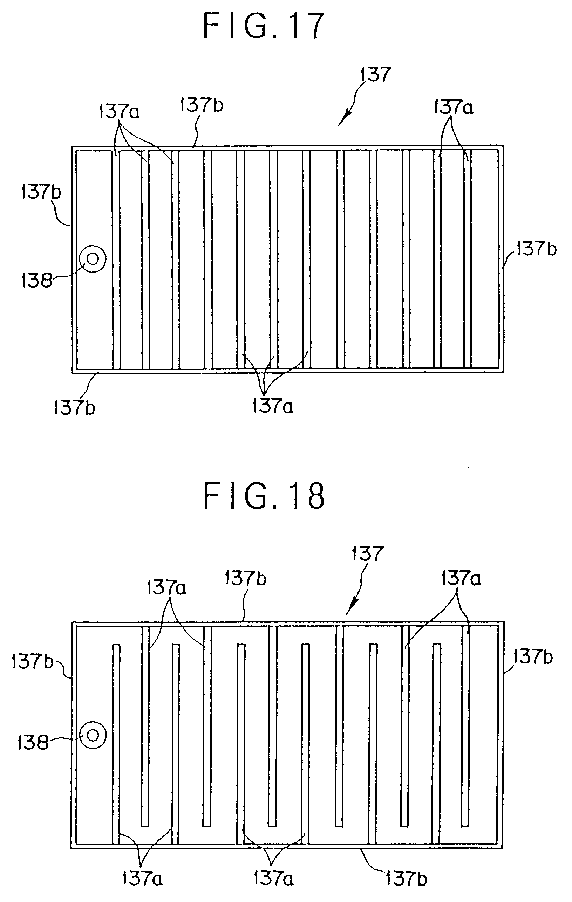

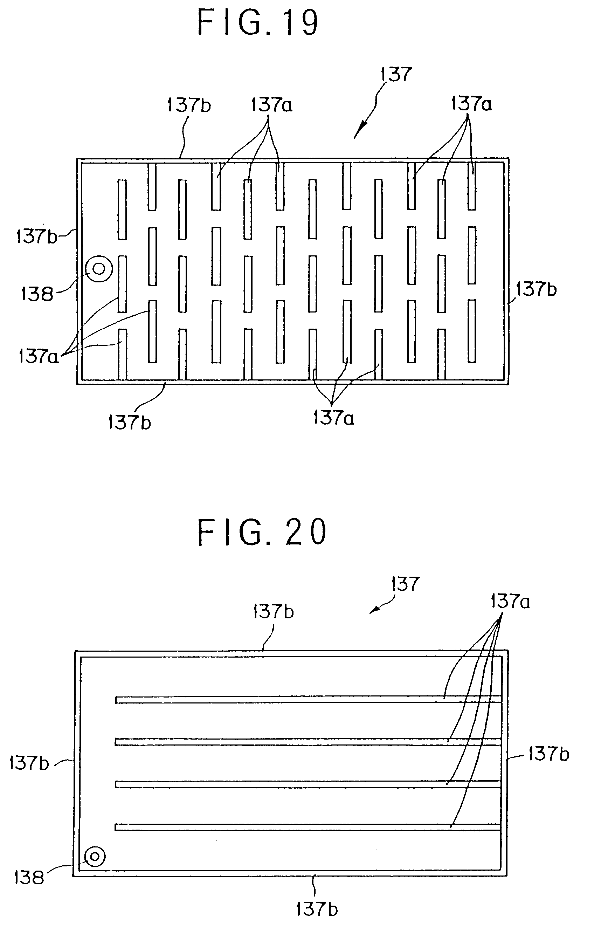

In the embodiment described above, when the protruded portions 137a formed on the flow passage formation support panel 137 is formed as continuous protruded portions 137a along the entire length of the width direction of the support panel 137 as shown in Fig. 17, the cultivation liquid is always dammed up by the protruded portions 137a and the cultivation liquid of constant amount is always stored in the flow passage formation support panel 137. Accordingly, the cultivation liquid supply to the plants can be ensured even if the supply thereof is stopped by some reason. The protruded portions 137a may be formed as shown in Figs. 18 and 19 so that they have partially non-continuous portions thereby to serve as guides for uniform flow of the cultivation liquid throughout the plant cultivation panel. The protruded portions 137a may further be formed as shown in Fig. 20. In this case, the flow passage formation support panel 137 is further inclined from the upper portion, as viewed, to the lower portion (the lower portion is positioned to a further lowered position and the liquid discharge nozzle 138 is also positioned lower), and a cultivation liquid supplied from the cultivation liquid distribution tube 95 can be uniformly flowed to the respective rows sectioned by the protruded portions 137a. According to this arrangement, the cultivation liquid having an even concentration (for example, dissolved oxygen amount) can be uniformly supplied to the respective rows. Further, in the examples of the protruded portions 137a having the arrangements shown in Figs. 18 to 20, all the cultivation liquid is flowed out by temporarily stopping the supply of the cultivation liquid through an intermittent operation of the pump, for example, so that the roots of the plants temporarily contact with oxygen in air, thus enhancing the oxygen absorption from the roots of the plants.

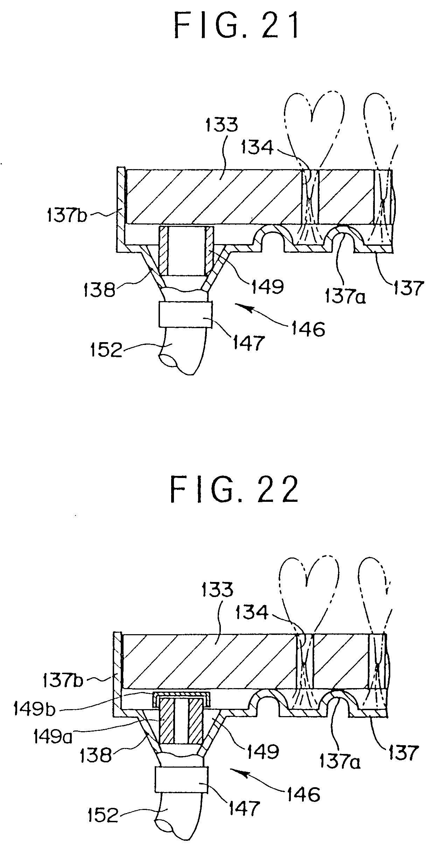

Further, in the plant cultivation panel 131 preferably utilized for the plant cultivation, there may take an arrangement such that a tubular member 149 is disposed, as shown in Fig. 21, in the liquid discharge nozzle 138 constituting the cultivation liquid discharge unit 146 so that the cultivation liquid flows in the liquid discharge nozzle 138 through the inside of the tubular member 149. According to the use of such tubular member 149, the cultivation liquid in the flow passage formation support panel 137 is stored in the flow passage formation support panel in a state that it has a surface level substantially the same height as the upper end surface of the tubular member 149. Further, as shown in Fig. 22, a tubular member 149a and a cap member 149b located above the tubular member 149a with a small gap therebetween may be disposed in the liquid discharge nozzle 138 constituting the cultivation liquid discharge unit 146 (the cap member 149a is partially secured to the tubular member 149a). According to this structure, the cultivation liquid in the flow passage formation support panel 137 is stored and discharged in a periodically repeated manner by the principle of a siphon or siphonage. That is, there is formed the siphon consisting of the small gap between the tubular member 149a and the cap member 149b, and an inner hole of the tubular member 149a, in which the liquid is once forced up to a high position and then force down. Therefore, when the surface level of the cultivation liquid reaches to the level substantially the same as that of the upper end surface of the tubular member 149a, the cultivation liquid starts to be discharged, and when the cultivation liquid becomes almost empty, the discharge is stopped and then the liquid starts to be stored. These operations of the cultivation liquid is continuously performed. According to these operations, the cultivation liquid can be uniformly supplied and the roots of the plants can be exposed to the air to thereby improve the oxygen absorption therefrom. Further, when such siphon phenomenon is utilized, it is necessary to suitably set the cultivation liquid supply amount and the dimension of the material for forming the siphon.

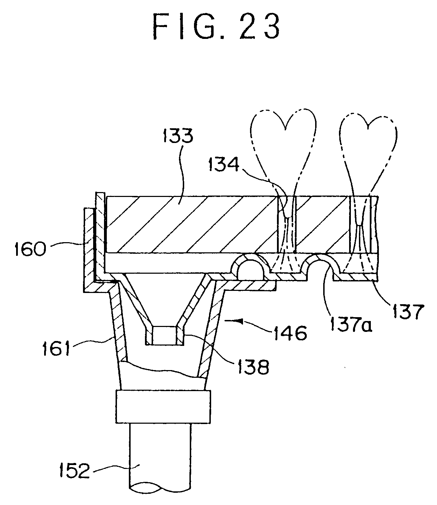

In the described embodiment, the bell-and-spigot joint 147 is connected to the liquid discharge nozzle 138 of the flow passage formation support panel 137, but in the plant cultivation panel 131 of the apparatus of the present invention, the bell-and-spigot joint 147 may be eliminated. Fig. 23 is a partially sectional view of the cultivation liquid discharge unit 146 of the plant cultivation panel of such example. Referring to Fig. 23, the plant cultivation panel 131 has substantially the same structure as that shown in Figs. 15 and 16 except that the bell-and-spigot joint 147 is not connected to the liquid discharge nozzle 138 of the flow passage formation support panel 137. The plant cultivation panel 131 shown in Fig. 23, is in a state being supported by a support member 160 of the plant cultivating apparatus described later, and the liquid discharge nozzle 138 is positioned inside a nozzle 161 projecting downward of the support member 160. A cultivation liquid recovery tube 152 is connected to the nozzle 161 of the support member 160. In such case, the cultivation liquid reaching the liquid discharge nozzle 138 of the cultivation liquid discharge unit 146, flows down in the liquid discharge nozzle 138 and then is fed to the cultivation liquid recovery tube 152 through the nozzle 161 of the support member 160. Therefore, the cultivation liquid is not exposed to light during this flow. Further, since the plant cultivation panel 131 and the cultivation liquid recovery tube 152 are not connected with each other, the plant cultivation panel 131 can be easily moved.

Further, it is to be noted that the plant cultivation panels preferably utilized for the plant cultivation according to the present invention, are not limited to the described embodiments. For example, the abutting surfaces between the planting panel 83 constituting the plant cultivation panel and the dam portions 85a of the cultivation liquid panel 85, and the abutting surfaces between the planting panel 133 and the the flow passage formation support panel 137, may be formed so as to provide staged surfaces or tape red surfaces in place of the simple flat surfaces shown in the drawings. According this structure, it can be surely to prevent the light from reaching the cultivation liquid discharge units 96 and 146 through the gaps between the planting panel 83 and the dam portions 85a and between the planting panel 133 and the wall portion 137b of the flow passage formation support panel 137. Further, a guide may be formed in place of the location of the cultivation liquid distribution tube 95 for ensuring the entirely uniform flow of the cultivation liquid on the plant cultivation panel.

In the cultivation liquid supply unit of the plant cultivation panels described above with reference to Figs. 12 through 23, there is no light exposure portion of the cultivation liquid. Furthermore, at the other end portion of the plant cultivation panel, there is provided the cultivation liquid discharge unit comprising the liquid discharge opening formed to the cultivation liquid panel and the liquid discharge nozzle formed to the support panel, or provided the cultivation liquid discharge unit comprising the liquid discharge nozzle formed to the flow passage formation support panel. Therefore, the cultivation liquid is not exposed to light in these cultivation liquid discharge units and the clean plant cultivation panel with no algae grown by the light irradiation can be realized, and in this plant cultivation panel, the planting panel can be easily set in or taken out by using the bell-and-spigot joint operation, thus providing an improved working efficiency.

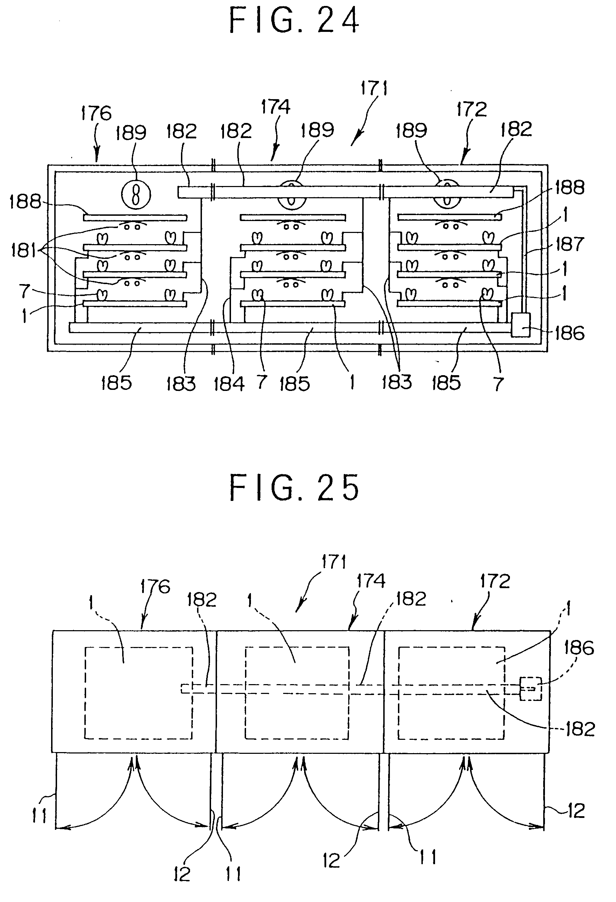

Fig. 24 is substantially a front view showing one example of a plant cultivating apparatus utilizing the plant cultivation panel shown in Figs. 12 and 13, and Fig. 25 is a plane view thereof. Referring to Figs. 24 and 25, a plant cultivating apparatus 171 is provided with a plurality of cylindrical housings 172, 174 and 176 integrally connected with each other. A pair of open-close doors 11 and 12 are provided to the front portion of each of the housings 172, 174 and 176, and openings, through which the plant cultivation panels 1 or the planting panels 83 constituting the panels 1 are inserted in or taken out, are formed by opening these doors 11 and 12. The interiors of these housings 172, 174 and 176 are shut out from an external environment by closing these doors 11 and 12.

In the interiors of the respective housings 172, 174 and 176, there are disposed plant cultivation panels 1, fluorescent lamps 181 as a lighting device for irradiating the plants 7 planted at the plant cultivation panels, cultivation liquid supply pipes 182 for supplying the cultivation liquid to the plant cultivation panels 1 and cultivation liquid recovery pipes 185, and air conditioners 189, respectively. Further, a cultivation liquid supply pump 186 for supplying the cultivation liquid to the cultivation liquid to the cultivation liquid supply pipes 182 is accommodated in the housing 172.

The plant cultivation panels 1 are set in the respective housings by means of support members, not shown. A cultivation liquid supply tubes 183 extend from the cultivation liquid supply pipes 182 to the respective plant cultivation panels 1 and are connected to the bell-and-spigot joints 94 constituting the aforementioned cultivation liquid supply unit 91. The cultivation liquid supplied to the plant cultivation panels 1 from the cultivation liquid supply tubes 183, flows in the passages formed between the cultivation liquid panels 85 and the planting panels 83, and then is guided into the cultivation liquid recovery tubes 184 connected to the bell-and-spigot joints 97, through the liquid discharge opening 86 formed to the cultivation liquid panels 85 and the liquid discharge nozzles 88 formed to the support panels 87. These cultivation liquid recovery tubes 184 are connected to the aforementioned cultivation liquid recovery pipes 185. It is desired, in consideration of the cultivation liquid flow in the plant cultivation panel 1, that the plant cultivation panel is set so that liquid discharge opening side is inclined to be slightly lowered. In the illustrated embodiment, although the plant cultivation panels 1 are set in vertical three stages, the number of stages or a gap between the adjacent two stages may be changed in accordance with the kinds of plants to be cultivated.

The fluorescent lamps 181 are disposed to the lower surfaces of the respective plant cultivation panels 1 except for one of the lowest stage, and also disposed to the lower surface of a mounting panel 188 supported by the support member, not shown, above the plant cultivation panels of the uppermost stage. There is no limit to the numbers and the location of the fluorescent lamps 181 to be disposed and they are optionally located.

One end portion of one of the cultivation liquid supply pipe 182, disposed in the housing 172, is connected to a tube 187 connected to the cultivation liquid supply pump 186 and the other end portion thereof is formed as an opened end portion. The cultivation liquid supply pipe 182 disposed in the housing 174 is opened at both ends thereof, and that 182 disposed in the housing 176 has an open end portion at its right side, as viewed, and has a a closed end portion at its left side. One end portion of the cultivation liquid recovery pipe 185, disposed in the housing 172, is connected to the cultivation liquid supply pump 186 and the other end portion thereof is formed as an opened end portion. The cultivation liquid recovery pipe 185 disposed in the housing 174 is opened at both ends thereof, and that 185 disposed in the housing 176 has an open end portion at its right side, as viewed, and has a closed end portion at its left side.

The air conditioners 189 are provided for creating the best condition in the interiors of the housings for cultivating the plants, and known air conditioners may be utilized. In the illustrated embodiment, although one air conditioner is provided for each housing, one air conditioner 189 may be disposed only in the housing 172 and air conditioning ducts connectable to this air conditioner may be disposed in the other housings.

One housing 174 of these housings 172, 174 and 176 has two openings at its bilateral surfaces or portions. On the other hand, the housing 172 has an opening formed at its left surface or side portion and the housing 176 has an opening at its right surface or side portion. The opening of the housing 172 is connected to the right-hand opening of the housing 174 and the opening of the housing 176 is connected to the left-hand opening of the housing 174. Through such connection of these housings 172, 174 and 176, the mutual connections between the respective cultivation liquid supply pipes 182, between the cultivation liquid recovery pipes 185 and between other electrical wirings are realized.

As described above, in the plant cultivating apparatus having the integrated structure of the housings 172, 174 and 176, the cultivation liquid supply pipes 182 and the cultivation liquid recovery pipes 185 are also integrally arranged. The cultivation liquid supplied to the respective plant cultivation panels 1 through the cultivation liquid supply pipes 182 flows in the plant cultivation panels 1 and is then recovered in the cultivation liquid recovery pipes 185. That is, it will be said that the respective housings constituting the plant cultivating apparatus 171 have structures in which the cultivation liquid flows down from the cultivation liquid supply pipes 182 to the cultivation liquid recovery pipes 185 through the respective plant cultivation panels 1. The cultivation liquid recovered in the cultivation liquid recovery pipes 185 by using this flow-down system is fed to the cultivation liquid supply pump 186 and then circulated to the cultivation liquid supply pipes 182 through the tube 187 by means of the cultivation liquid supply pump 186 and supplied to the plants during the liquid flow down period in the plant cultivation panels 1. Thus, according to the apparatus of the present invention, it is not required to provide a large-scaled cultivation liquid atomizer utilized in a conventional apparatus.

In the plant cultivating apparatus 171 of the structure described above, since the cultivation liquid supply pump 186 is provided only for the housing 172. Therefore, any faults are not caused with respect to the functions of the plant cultivating apparatus itself, even if the formation numbers of the housings to be connected to the housing 172 be changed. For example, when it is required to make the installation scale of the apparatus minimally small, the housing 172 may be directly connected to the housing 176, whereas when it is required to make the installation scale thereof large, the numbers of the housings 174 to be connected between the housings 172 and 176 will be increased. That is, the installation scale of the apparatus can be changed by increasing or decreasing the numbers of the housings(not equipped with the pump 186) connected between the end housings 172 and 176.

According to this embodiment, a troublesome working for designing the plant cultivation apparatus at every time its installation scale be changed, can be substantially eliminated, and furthermore, in the actual assembling site, only the working for connecting preliminarily manufactured housings is required, so that the working time can be remarkably reduced, resulting in the cost down for the manufacturing of the plant cultivating apparatus, itself. Still furthermore, after the apparatus starts to operate, when it is required to move the whole apparatus or to increase or decrease the installation scale in accordance with the scale of the plant cultivation, the apparatus can be easily moved by disconnecting the respective housings and the whole equipment can be also increased or decreased by adding or removing the housings in their numbers.

### Possibility of Industrial Usage

According to the plant cultivating apparatus of the present invention, plants such as vegetables capable of being cultivated by using water can be artificially cultivated with high efficiency even in an environment, in which plants do not naturally grow and are not naturally cultivated or in places having less space for cultivation. For example, the plants may be cultivated in cold regions, narrow ground spaces in mountains, farm-lands, fallow regions, narrow farm-lands near cities, play lands and storehouses in cities, spaces neighboring super stores, etc. and ships.

## Claims

1. A plant cultivating apparatus which is provided with a housing for accommodating a plant cultivation panel having a plant planting surface and an equipment accommodating portion which is integrally disposed inside or outside of the housing and in which an equipment for performing an air conditioning at least in an interior of the housing and an equipment for supplying a cultivation liquid to the plant cultivation panel, characterized in that a plurality of said plant cultivation panels are arranged inside the housing in a multiple rows and are provided with planting panels for planting plants so as to be easily taken out from the housing and in that said housing has the interior capable of being shut out environmentally from an external atmosphere when the plants are cultivated and artificial working of the cultivation is done only from the outside of the housing.

2. A plant cultivating apparatus according to claim 1, wherein said plant cultivation panels are arranged in vertically standing rows.

3. A plant cultivating apparatus according to claim 1, wherein said plant cultivation panels are arranged in multiple stages with a slight inclination to allow the cultivation liquid to flow down.

4. A plant cultivating apparatus according to claim 3, wherein each of said plant cultivation panels has one surface to which plants are planted and another surface on which a lighting device is mounted substantially to irradiate the plants.

5. A plant cultivating apparatus according to claim 1, wherein each of said plant cultivation panels is provided with a planting panel to which the plants are planted and a cultivation liquid panel for forming a cultivation liquid flow passage in detachable combination with said planting panel.

6. A plant cultivating apparatus according to claim 1, wherein said plant cultivation panel is provided with a planting panel arranged substantially horizontally for planting the plants, a cultivation liquid panel disposed below the planting panel for forming a cultivation liquid flow passage and a support panel fitted to a lower side of said cultivation liquid panel for supporting the cultivation liquid panel, said plant cultivation panel having one end to which a cultivation liquid supply unit is provided and another end to which a cultivation liquid discharge unit is provided,
said cultivation liquid supply unit is provided with a liquid supply opening formed between said planting panel and said cultivation liquid panel, a closing plate fitted to said liquid supply opening to close the same and a bell-and-spigot joint connected to an upper portion of said closing plate, and
said cultivation liquid discharge unit is provided with a liquid discharge opening formed to said cultivation liquid panel and a liquid discharge nozzle formed to said support panel.

7. A plant cultivating apparatus according to claim 6, wherein said plant cultivation panel is provided with a bell-and-spigot joint connected to said liquid discharge nozzle.

8. A plant cultivating apparatus according to claim 1, wherein said plant cultivation panel is provided with a planting panel arranged substantially horizontally for planting the plants and a liquid flow passage formation support panel disposed below the planting panel for forming a cultivation liquid flow passage and for supporting the planting panel, said plant cultivation panel having one end to which a cultivation liquid supply unit is provided and another end to which a cultivation liquid discharge unit is provided,
said cultivation liquid supply unit is provided with a liquid supply opening formed between said planting panel and said liquid flow passage formation support panel, a closing plate fitted to said liquid supply opening to close the same and a bell-and-spigot joint connected to an upper portion of said closing plate, and
said cultivation liquid discharge unit is provided with a liquid discharge nozzle formed to said liquid flow passage formation support panel.

9. A plant cultivating apparatus according to claim 8, wherein said plant cultivation panel is provided with a bell-and-spigot joint connected to said liquid discharge nozzle.

10. A plant cultivating apparatus according to claim 1, wherein said housing comprises a plurality of cylindrical housings continuously connected with each other and each having an opening formed to one surface thereof and each accommodationg the plant cultivation panel, a lighting device for irradiating the plants on the plant cultivation panel and a cultivation liquid supply pipe for supplying the cultivation liquid to the plant cultivation panel, and wherein a cultivation liquid supply pump is provided to one of said housings and said housings are integrally connected one by one through the openings of the respective housings.
